# EUROPEAN PATENT SPECIFICATION

(11) **EP 0 310 196 B1**
(45) Date of publication and mention of the grant of the patent: **12.05.1993**
(21) Application number: 88202142.1
(22) Date of filing: 30.09.1988
(51) Int. Cl.: A23B 7/06, A23B 7/00

(54) **A process for preserving potatoes**
Verfahren zur Konservierung von Kartoffeln
Procédé de conservation de pommes de terre

(30) Priority: 02.10.1987 NL 8702355
(43) Date of publication of application: 05.04.1989
(73) Proprietor: TOP FOODS ELBURG B.V., NL-8081 HH Elburg (NL)
(72) Inventor: Verweij, Herman, 8181 PL Heerde (NL)
(74) Representative: Smulders, Theodorus A.H.J., Ir.

(56) References cited:
- FR-A- 2 431 261
- FR-A- 2 561 076
- NL-A- 8 600 799
- NL-C- 170 226
- US-A- 3 578 463
- US-A- 4 073 952
- CHEMICAL ABSTRACTS, vol. 75, no. 19, November 1971, page 131, abstract no. 117174z, Columbus, Ohio, US; S.C. CHEN et al.: "Blanching of white potatoes by microwave energy followed by boiling water", & J. FOOD. SCI. 1971 36(5), 742-3
- CHEMICAL ABSTRACTS, vol. 73, no. 5, August 1970, page 236, abstract no. 23922y, Columbus, Ohio, US; W.C. DIETRICH et al.: "Comparison of microwave with steam of water blanching of corn-on-the-cob", & FOOD TECHNOL. (CHICAGO) 1970, 24(3), 87-90

## Description

This invention relates to a process for preserving potatoes by subjecting peeled or scraped potatoes to a heat treatment with water or steam and to a treatment with microwaves to such a degree that the starch contained in the potatoes is gelatinized and the reaction to peroxidase has become negative in the outer part of the potatoes, and the potatoes are subsequently cooled.

A process of this kind is known from Chemical Abstracts, Vol. 75, No. 19 abstract No. 117174z. This abstract describes a process in which potatoes are blanched by heating with microwave energy for 0.5 to 2 min, followed by boiling water for 0 to 5 Mn. Microwave energy coupled with hot water treatment can shorten the blanching time, compared to hot water alone. It is generally known that blanching not only fully gelatinizes the starch in potatoes but also fully inactivates all of the peroxidase present in a potato.

The object of the present invention, however, is to provide a process for preserving potatoes in such a manner that all of the starch contained in the tuber has just been gelatinized but that the enzyme peroxidase in the interior of the tuber, with potatoes e.g. from a distance of about 4 mm from the outer surface, remains active. Thus treated potatoes have a storage life at a temperature of 3-5°C of more than 8 days according to Dutch patent 170,226. This patent describes a process for preserving tubers, such as potatoes, wherein a heat treatment is performed with water or steam of minimally 70°C.

It is observed that the distance from the outer surface in the direction of the core over which the reaction to peroxidase has become negative depends upon the size of the treated potato. Mostly, this is not inconvenient, because the degree of heat treatment can be tuned to the average size of the potatoes to be treated, while, moreover, these are supplied in general sorted according to size.

In actual practice, the method according to said Dutch patent, however, is restricted to application with potatoes that are not too big, e.g. having a cross-section of about 28-35 mm. With larger potatoes, the problem occurs that the heat treatment does not penetrate sufficiently into the core of the potato, so that the desired gelatinization does not occur at that location. True, this gelatinization of the core can be obtained by choosing a longer heat treatment duration, but in that case, like in the abstract mentioned above, the region wherein the peroxidase reaction is negative will have extended much further from the skin towards the core than is desirable. The potato is then already practically done on the outside when the core has just attained a sufficient degree of gelatinization. It is clear that in that case the major advantage of the use of this method with smaller potatoes having a cross-section to about 35 mm, viz. the appearance of a fresh product combined with a good storage life, has been lost.

According to the present invention, it has been found that this object can be achieved in that the potatoes are likewise subjected to a treatment with microwaves, which can take place before or after the water or steam treatment. Therefore, according to the invention a process is provided for preserving potatoes by subjecting peeled or scraped potatoes to a heat treatment with water or steam, and, before or after the heat treatment, to a treatment with microwaves to such a degree that the starch contained in the potatoes is just gelatinized and that the reaction to peroxidase has become negative in the outer part of the potatoes (a distance of only a few millimeters) and is positive in the core of the potatoes, and by subsequently cooling the potatoes.

By "microwaves" are understood any form of electromagnetic radiation which is absorbed more or less selectively by the water in the potatoes, thereby heating up the same. The frequencies of the microwaves to be used therefor lie in the range of 900-3,000 mHz; preferably, a frequency of 2,450 mHz is used.

Microwaves have a good penetration capacity and are capable of uniformly heating the entire potato as far as into the interior. According to the present invention, the treatment with microwaves is performed just so long that the desired extent of gelatinization has been reached in the core without inactivation of the enzyme peroxidase. This is a surprising result, because one would expect from the abstract from Chemical Abstracts mentioned above that microwave treatment is largely responsible for inactivating peroxidase. An additional advantage of this microwave treatment is that this radiation has a certain sterilizing effect. This compares the process according to the present invention, from a bacteriological viewpoint, favourably with the known process according to Dutch patent 170,226.

The heat treatment with water or steam has especially an effect on the outer layer of the potato and is performed in such a manner that the combined effect of both treatments is that the reaction to peroxidase proceeding in the direction of the potato core to a distance of only a few millimeters from the outer surface thereof has become negative. By means of a simple experiment the correct duration and intensity of the treatment can be determined in relation to the size of the potato.

The heat treatment with water or steam requires a minimal temperature of about 70°C, because only at this temperature inactivation of the peroxidase does occur. The maximal treatment temperature is not critical, since the effect to be attained is a function of time and temperature. It is clear that at a higher treatment temperature, it will be possible to employ a shorter treatment duration and vice versa. The heat treatment should be performed in such a manner that the formation of loose starch particles and loose cell particles at the surface of the potato is avoided, because these result in fouling of the package. In general, a treatment temperature ranging between 70 and 100°C is selected.

The microwave treatment can be effected before or after the heat treatment with water or steam. However, it is preferred to first perform the microwave treatment. After the subsequent water or steam treatment, the potatoes are only cooled yet, which can be effected conveniently under sterile conditions, and are packaged.

The cooling of the treated potatoes is performed in general with a forced flow of a gas having no adverse effect on the treated potatoes. Preferably, use is made of air for this purpose, which is filtered previously to remove the microorganisms and dust particles. The advantage of the use of a forced air flow for cooling, in addition to the relative simplicity thereof, is that the potatoes thus cooled do not absorb moisture. Direct cooling with water is to be avoided, because the treated potatoes will then absorb much water and will give this up again in the package to be made subsequently.

The potatoes treated with application of the process according to the present invention, upon storage at a temperature of 3-5°C, have a storage life of more than 14 days and upon storage at room temperature, a storage life of at least 5 days, it being understood by storage life the substantially unchanged organoleptic and microbiological, as well as exterior properties. It is observed that due to the combined microwave and water/steam treatment of the process according to the present invention, a further improvement in the storage life of potatoes is achieved relatively to merely a heat treatment according to Dutch patent 170,226.

Although not necessary in general, the products obtained through application of the process according to the present invention can be treated with a preserving agent, thereby still further improving the storage life. As preserving agent can be used e.g. a solution of sorbic acid or sulphur dioxide.

The process according to the present invention can be applied besides to potatoes, to other large tuberous plants, such as beets, celeriac, etc.

The process of the present invention will be better understood by reference to the following examples.

### Example I

A quantity of 100 kg of peeled potatoes sorted for a cross-section of 50-70 mm, was placed in a microwave oven and irradiated for 3 minutes, using a radiation power of 1.5 kW and a frequency of 2,450 mHz, thereby just gelatinizing the core of the potato. Subsequently, the potatoes were steam-treated at a temperature of 95°C. The heat treatment was monitored by sampling and was continued until the reaction in the potatoes to peroxidase was negative down to a depth of 3-4 mm from the outer surface and the starch contained in the potatoes had just been gelatinized. This was achieved at a temperature of 95°C and a duration of 5 minutes.

After the heat treatment, the potatoes were cooled with a forced flow of pre-cooled, purified air. The cooling was continued until the temperature in the interior of the potatoes was 3-5°C.

The potatoes thus treated were packaged and stored at a temperature of 1-5°C and they were found storable for at least 14 days, i.e. during that period organoleptically, microbiologically and as regards the appearance, they were not distinguishable from fresh products.

### Example II

Example I was repeated but now the potatoes were immersed after cooling in a solution containing 0.5% by weight sodium metabisulphite and 0.2% by weight sorbic acid. The treatment took 1 minute, after which the potatoes contained 4-50 ppm sulphite and 15-20 ppm sorbic acid.

The potatoes thus treated were packaged and stored at a temperature of 1-5°C.

The storage life at that temperature was at least 20 days and upon storage at room temperature (20°C) the potatoes were found to be storable for at least 5 days.

### Example III

A quantity of 100 kg peeled potatoes sorted for a cross-section of 50-70 mm was treated for 5 minutes with steam of 95°C. subsequently, the potatoes were placed in a microwave oven and irradiated for 2 minutes, using a radiation power of 1.5 kW and a frequency of 2,450 mHz, thereby just gelatinizing the potato core, while the reaction to peroxidase down to a depth of 3-4 mm from the outer surface was negative. The progress of the heat treatment was continuously monitored by sampling.

After the heat treatment, the potatoes were cooled for 90 minutes with a forced flow of pre-cooled, purified air. The cooling was continued until the temperature in the interior of the potatoes had dropped to 3-5°C.

The potatoes thus treated were packaged and stored at a temperature of 1-5°C and they were found to have a storage life of at least 10 days, i.e. during that period they were not distinguishable organoleptically and microbiologically and as regards the appearance from fresh product. The storage life at room temperature (20°C) was at least 4 days.

### Example IV

Example I was repeated with 100 kg peeled potatoes sorted for a cross-section of 35-50 mm. Irradiation in the microwave oven took place for 1.5 minute at a power of 1.5 kW and a frequency of 2,450 mHz. The storage life of the potatoes was equal to that of the potatoes prepared according to Example I.

## Claims

1. A process for preserving potatoes by subjecting peeled or scraped potatoes to a heat treatment with water or steam, and, before or after the heat treatment, to a treatment with microwaves to such a degree that the starch contained in the potatoes is just gelatinized and that the reaction to peroxidase has become negative in the outer part of the potatoes (a distance of only a few millimeters) and is positive in the core of the potatoes, and by subsequently cooling the potatoes.

2. A process as claimed in claim 1, wherein the heat treatment is carried out with water or steam having a temperature ranging between 70 and 100°C.

3. A process as claimed in claim 1 or 2, wherein the treatment with microwaves is performed before the treatment with water or steam.

4. A process as claimed in one of the claims 1-3, wherein microwaves are used having a frequency of 900-3,000 mHz.

5. A process as claimed in one of the claims 1-4, wherein the potatoes have an average cross section of about 35-70 mm.

6. A process as claimed in one of the claims 1-5, wherein the potatoes, after the treatment, are cooled through application of a forced air flow.

7. A process as claimed in one of the claims 1-6, wherein a preserving agent is added to the potatoes after cooling.

## Patentansprüche

1. Verfahren zum Konservieren von Kartoffeln, bei dem geschälte oder abgeschabte Kartoffeln einer Wärmebehandlung mit Wasser oder Dampf ausgesetzt werden und vor oder nach der Wärmebehandlung einer Behandlung mit Mikrowellen, bis die in den Kartoffeln enthaltene Stärke gerade geliert und die Reaktion auf Peroxidase im äußeren Bereich der Kartoffeln (ein Bereich von nur ein paar Millimetern) negativ und im Inneren der Kartoffeln positiv ist, und bei dem die Kartoffeln anschließend gekühlt werden.

2. Verfahren nach Anspruch 1, bei dem die Wärmebehandlung mit Wasser oder Dampf bei einer Temperatur zwischen 70 und 100°C erfolgt.

3. Verfahren nach Anspruch 1 oder 2, bei dem die Behandlung mit Mikrowellen vor der Behandlung mit Wasser oder Dampf erfolgt.

4. Verfahren nach einem der Ansprüche 1 bis 3, bei dem Mikrowellen mit einer Frequenz von 900 bis 3000 mHz angewendet werden.

5. Verfahren nach einem der Ansprüche 1 bis 4, bei dem die Kartoffeln einen durchschnittlichen Querschnitt von etwa 35 bis 70 mm haben.

6. Verfahren nach einem der Ansprüche 1 bis 5, bei dem die Kartoffeln nach der Behandlung durch einen Luftstrom gekühlt werden.

7. Verfahren nach einem der Ansprüche 1 bis 6, bei dem nach dem Abkühlen ein Konservierungsmittel zu den Kartoffeln hinzugefügt wird.

## Revendications

1. Procédé de conservation de pommes de terre, en soumettant des pommes de terre pelées ou grattées à un traitement thermique à l'eau ou à la vapeur et, avant ou après le traitement thermique à un traitement aux micro-ondes jusqu'à un degré tel que la fécule renfermée par les pommes de terre soit tout juste gélatinifiée, et que la réaction à la peroxydase soit devenue négative dans la partie extérieure des pommes de terre (sur une distance de quelques millimètres seulement), et soit positive au coeur des pommes de terre ; et en refroidissant ensuite les pommes de terre.

2. Procédé selon la revendication 1, dans lequel le traitement thermique est effectué par de l'eau ou de la vapeur présentant une température comprise entre 70 et 100°C.

3. Procédé selon la revendication 1 ou 2 dans lequel le traitement aux micro-ondes est effectué avant le traitement à l'eau ou à la vapeur.

4. Procédé selon l'une des revendications 1-3, dans lequel on utilise des micro-ondes présentant une fréquence de 900-3 000 mHz.

5. Procédé selon l'une des revendications 1-4, dans lequel les pommes de terre on t une section moyenne d'environ 35-70 mm.

6. Procédé selon l'une des revendications 1-5, dans lequel les pommes de terre sont refroidies à l'issue du traitement, par application d'un courant d'air forcé.

7. Procédé selon l'une des revendications 1-6, dans lequel un agent de conservation est ajouté aux pommes de terre après refroidissement.
